# EUROPÄISCHE PATENTSCHRIFT

(11) **EP 0 779 186 B1**
(45) Veröffentlichungstag und Bekanntmachung des Hinweises auf die Patenterteilung: **16.01.2002**
(21) Anmeldenummer: 96118895.0
(22) Anmeldetag: 25.11.1996
(51) Int. Cl.: B60R 21/20

(54) **Fahrzeuglenkrad mit einem integrierten Fahrzeuginsassen-Rückhaltesystem**
Steering wheel with integrated passenger restraint system
Volant avec système de retenue pour occupant

(30) Priorität: 12.12.1995 DE 29519700 U
(43) Veröffentlichungstag der Anmeldung: 18.06.1997
(73) Patentinhaber: TRW Occupant Restraint Systems GmbH & Co. KG, 73551 Alfdorf (DE)
(72) Erfinder: Heilig, Alexander, 73550 Wissgoldingen (DE)
(74) Vertreter: Degwert, Hartmut, Dipl.-Phys.

(56) Entgegenhaltungen:
- EP-A- 0 648 661
- EP-A- 0 691 245
- WO-A-96/05987
- GB-A- 2 287 305

## Beschreibung

Die Erfindung betrifft ein Fahrzeuglenkrad gemäß dem Oberbegriff des Anspruchs 1.

Die Funktion eines solchen Rückhaltesystems besteht darin, bei einem Fahrzeugunfall die Vorwärtsverlagerung des Fahrers relativ zum Fahrzeug zu begrenzen. Zu diesem Zweck wird der Gassack im Bedarfsfall ausgehend von einem zusammengefalteten Ruhezustand in einen entfalteten Aktivzustand durch unter Druck stehendes Gas überführt, welches von einem Gasgenerators bereitgestellt wird.

Üblicherweise wird der Gassack in das Fahrzeuglenkrad von der dem Fahrer zugewandten Seite eingesetzt. Dabei wird zuerst das Lenkrad auf der zugehörigen Lenkwelle montiert; dann erst werden der Gassack und gegebenenfalls der Gasgenerator in das Lenkrad eingesetzt und in diesem befestigt. Schließlich wird eine Gassackabdeckung aufgesetzt, welche den Gassack schützt und ihn erst bei einer Aktivierung des Fahrzeuginsassen-Rückhaltesystems freigibt.

Die GB 2 287 305 A zeigt ein gattungsgemäßes Lenkrad, bei dessen Montage der Gasgenerator mit seinem Spannabschnitt auf die Haltefläche des Lenkrades aufgesetzt wird, wobei an der Haltefläche vorgesehene Bolzen in entsprechende Bohrungen im Spannabschnitt greifen. Die somit entstandene Einheit wird anschließend auf die Nabe aufgesetzt und mit dieser über die Bolzen verschraubt, so daß der Gasgenerator mit seinem Spannabschnitt zwischen der Spannfläche der Nabe und der Haltefläche des Lenkradkörpers eingeklemmt ist.

Die Aufgabe uer Erfindung besteht darin, ein Fahrzeuglenkrad der eingangs genannten Art zu schaffen, bei dem die Montage des Fahrzeuginsassen-Rückhaltesystems wesentlich vereinfacht ist.

Diese Aufgabe wird durch ein Fahrzeuglenkrad der eingangs genannten Art gelöst, welches dadurch gekennzeichnet ist, der Halteabschnitt des Gassacks zwischen der Haltefläche des Lenkradkörpers und der Spannfläche der Nabe eingeklemmt ist. Diese Gestaltung ermöglicht, den Gassack und den Gasgenerator von hinten in den Lenkradkörper einzusetzen und dann diesen mit der Nabe zu verbinden, wodurch dann bereits die Bestandteile des Fahrzeuginsassen-Rückhaltesystems in dem Fahrzeuglenkrad festgelegt sind. Ein abschließendes Anbringen der Gassackabdeckung ist nicht notwendig, da diese bereits integraler Bestandteil des Lenkradkörpers ist.

Vorteilhafte Ausgestaltungen der Erfindung sind in den Unteransprüchen angegeben.

Die Erfindung wird nachfolgend unter Bezugnahme auf zwei Ausführungsformen beschrieben, die in der Zeichnung dargestellt sind. In dieser zeigen:
- Fig. 1: einen Querschnitt durch ein Lenkrad gemäß einer ersten Ausführungsform der Erfindung;
- Fig. 2: einen Querschnitt durch ein Lenkrad gemäß einer zweiten Ausführungsform der Erfindung; und
- Fig. 3: einen Ausschnitt aus Fig. 2 in vergrößertem Maßstab.

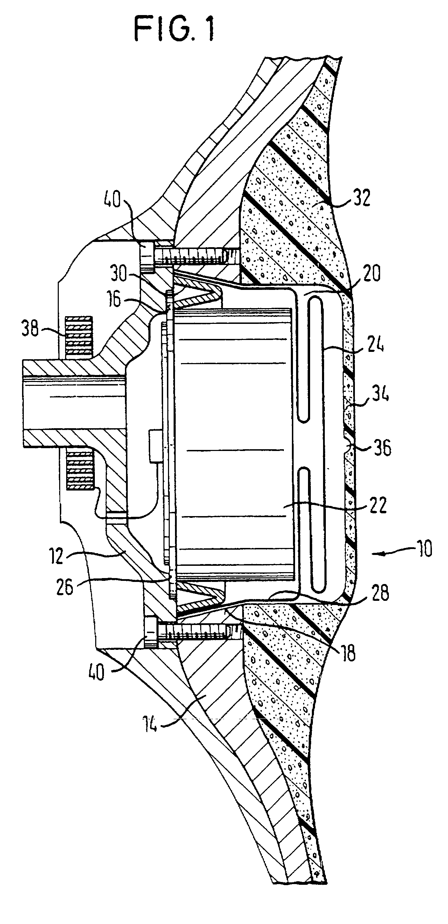

In Fig. 1 ist ein Fahrzeuglenkrad 10 gemäß einer ersten Ausführungsform der Erfindung dargestellt. Das Fahrzeuglenkrad 10 besteht aus einer Nabe 12 und einem Lenkradkörper 14. Die Nabe 12 weist eine kreisringartige Spannfläche 16 auf, während der Lenkradkörper 14 eine Haltefläche 18 aufweist, welche die Gestalt der Innenfläche eines Kegelstumpfes hat, dessen größere Grundfläche der Spannfläche 16 zugewandt ist und dessen Mittelachse mit der Mittelachse dieser Spannfläche zusammenfällt.

Im Lenkradkörper 14 ist ein Hohlraum 20 ausgebildet, in welchem ein Gasgenerator 22 und ein Gassack 24 angeordnet sind. Der Gasgenerator 22 ist mit einem flanschartigen Spannabschnitt 26 versehen, dessen Abmessungen an die Abmessungen der Spannfläche 16 angepaßt sind. Der Gassack 24 weist eine Einlaßöffnung auf, deren Berandungsbereich einen Halteabschnitt 28 für den Gassack 24 bildet. Dieser Halteabschnitt 28 ist nach Art eines Kegelstumpfes ausgebildet, dessen Abmessungen an die Abmessungen der Haltefläche 18 angepaßt sind. Zwischen dem Halteabschnitt 28 und den Spannabschnitt 26 ist ferner ein Spannring 30 angeordnet, der einen V-förmigen Querschnitt hat.

Der Lenkradkörper 14 ist schließlich mit einer Ummantelung 32 umschäumt, deren den Hohlraum 20 auf der dem Fahrer zugewandten Seite abschließender Bereich eine Gassackabdeckung 34 bildet. An dieser Gassackabdeckung 34 ist auch eine Aufreißlinie 36 ausgebildet, entlang der die Gassackabdeckung 34 aufreißt, wenn das Fahrzeuginsassen-Rückhaltesystem betätigt wird.

Die Montage des Fahrzeuglenkrades geschieht in der folgenden Weise: In den Hohlraum 20 des Lenkradkörpers 14 wird der geeignet zusammengefaltete Gassack 24 so eingesetzt, daß dessen Halteabschnitt 28 an der Haltefläche 18 anliegt. Dann wird der Spannring 30 so in den Hohlraum 20 eingesetzt, daß die geöffnete Seite des Spannrings 30 zu der von der Gassackabdeckung 34 abgewandten Seite gerichtet ist und die Außenumfangsfläche des radial außenliegenden Schenkels an dem Halteabschnitt 28 des Gassacks 24 zu liegen kommt. Dann wird in den Hohlraum 20 der Gasgenerator 22 so eingesetzt, daß die eine Seite des Spannabschnitts an der Stirnseite des radial innenliegenden Schenkels des Spannrings 30 anliegt. Zuletzt wird die Nabe 12 so auf den Lenkradkörper 14 aufgesetzt, daß die Spannfläche 16 am Spannabschnitt 26 des Gasgenerators 22 anliegt. Nun wird die Nabe 12 mit dem Lenkradkörper 14 mittels Schrauben 40 verschraubt. Die Abmessungen der Spannfläche 16, der Haltefläche 18 und des Spannrings 30 sind dabei so gewählt, daß beim Verschrauben der Nabe 12 mit dem Lenkradkörper 14 eine elastische Verformung des Spannrings 30 auftritt, wodurch in besonders einfacher Weise zum einen Herstellungstoleranzen aufgefangen werden können und zum anderen der Gasgenerator 22 und der Gassack 24 sicher miteinander und sicher gegen die Nabe 12 sowie den Lenkradkörper 14 verspannt werden können.

Durch diese Gestaltung ergeben sich die folgenden Vorteile: Die Montage des Fahrzeuginsassen-Rückhaltesystems in dem Fahrzeuglenkrad ist besonders einfach, da abgesehen von einem bloßen Einsetzen der einzelnen Bauteile und einem Verschrauben der Nabe mit dem Lenkradkörper keine weiteren Handhabungsschritte notwendig sind. Insbesondere wird eine getrennte Gassackabdeckung überflüssig, da durch die Montage des Fahrzeuginsassen-Rückhaltesystems ausgehend von der dem Fahrer abgewandten Seite des Fahrzeuglenkrades die Gassackabdeckung bereits als integraler Bestandteil des Lenkradkörpers hergestellt werden kann. Durch die Klemmwirkung des Spannringes können Herstellungstoleranzen in besonders einfacher Weise aufgenommen werden. Gleichzeitig wird aufgrund der besonderen Ausgestaltung der Haltefläche eine sehr hohe Klemmkraft erzielt. Ferner wird die Montage aller Bauelemente in nur einer Richtung vorgenommen, was besondere Vorteile hinsichtlich einer automatisierten Montage bietet. Für die Sicherheit der Festlegung der Bauteile des Fahrzeuginsassen-Rückhaltesystems ist es außerdem vorteilhaft:, daß alle für die Festlegung dieser Bauteile notwendigen Teile, also der Spannabschnitt, der Spannring und der Halteabschnitt, hintereinanderliegend im Kraftflußweg der Klemmkraft angeordnet sind. Wenn für die Verbindung des Fahrzeuglenkrades mit der (nicht dargestellten) Lenkwelle eine von der dem Fahrer abgewandten Seite des Fahrzeuglenkrades herstellbare Verbindung verwendet wird, kann das Fahrzeuglenkrad dem Fahrzeughersteller als vormontierte Baugruppe geliefert werden. Diese Baugruppe kann auch bereits eine Wickelfeder 38 enthalten, über die beispielsweise Signale für die Auslösung des Gasgenerators zum Fahrzeuglenkrad übertragen werden können.

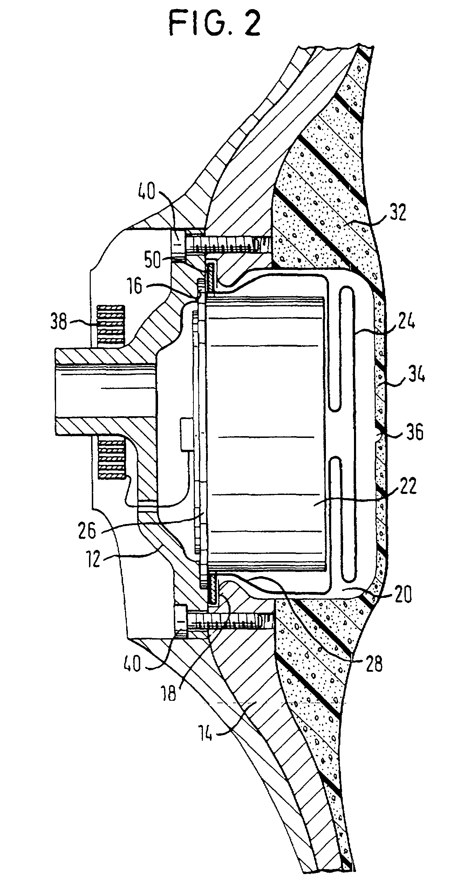

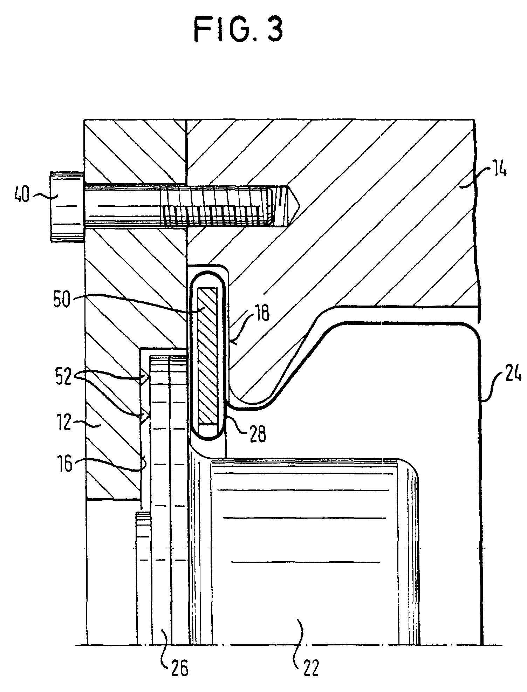

In den Figuren 2 und 3 ist ein Fahrzeuglenkrad gemäß einer zweiten Ausführungsform der Erfindung dargestellt. In diesen Figuren werden für aus Fig. 1 bekannte Bauteile dieselben Bezugszeichen verwendet, und hinsichtlich der Funktion dieser Bauteile wird auf die Beschreibung zu Fig. 1 verwiesen. Nachfolgend werden nur die Unterschiede zwischen den beiden dargestellten Ausführungsformen erläutert.

Im Gegensatz zur kegelstumpfartigen Ausbildung der Haltefläche bei der ersten Ausführungsform hat die Haltefläche 18 bei der zweiten Ausführungsform die Gestalt eines Kreisringes, dessen Mittelachse mit der Mittelachse der Spannfläche 16 zusammenfällt. Der Halteabschnitt 28 des Gassacks 24 enthält einen eingenähten Haltering 50, dessen Querschnitt allgemein rechteckig ist. Weiterhin ist die Spannfläche 16 an der Nabe 12 mit mehreren hervorstehenden Verformungselementen 52 (Fig. 3) versehen.

Die Montage des Fahrzeuginsassen-Rückhaltesystems in dem Fahrzeuglenkrad erfolgt in der folgenden Weise: Zuerst wird der Gassack 24 so in den Hohlraum 20 eingelegt, daß der Haltering 50 auf der Haltefläche 18 aufliegt. Dann wird der Gasgenerator 22 in den Hohlraum 20 eingesetzt, so daß der Spannabschnitt 26 auf dem Haltering 50 aufliegt. Schließlich wird die Nabe 12 so auf den Lenkradkörper 24 aufgesetzt, daß die Verformungselemente 52 der Spannfläche 16 auf dem Spannabschnitt 26 des Gasgenerators 22 aufliegen. Zuletzt wird die Nabe 12 mit dem Lenkradkörper 14 verschraubt. Dabei werden der Haltering 50 und der Spannabschnitt 26 zwischen der Haltefläche 18 und der Spannfläche 16 eingeklemmt, wobei es zu einer Verformung der Verformungselemente 52 kommt. Diese Verformung der Verformungselemente 52 gewährleistet, daß es unabhängig von Herstellungstoleranzen zu einer sicheren Festlegung des Halterings 50 und des Spannabschnitts 26 kommt. Die durch diese Art der Montage erzielbaren Vorteile entsprechen im wesentlichen den Vorteilen, die unter Bezug auf die erste Ausführungsform erläutert wurden.

## Patentansprüche

1. Fahrzeuglenkrad mit einem integrierten Fahrzeuginsassen-Rückhaltesystem, welches aus einem Gasgenerator (22) mit einem Spannabschnitt (26) und einem Gassack (24) mit einer Einlaßöffnung besteht, deren Berandungsbereich einen Halteabschnitt (28) bildet, wobei das Fahrzeuglenkrad (10) aus einer Nabe (12) und einem Lenkradkörper (14) mit einer Gassackabdeckung (34) besteht, die integraler Bestandteil des Lenkradkörpers (14) ist, wobei an der Nabe (12) eine Spannfläche (16) und an dem Lenkradkörper (14) eine Haltefläche (18) ausgebildet ist, und wobei durch Verspannen der Nabe (12) mit dem Lenkradkörper (14) der Spannabschnitt (26) des Gasgenerators zwischen der Haltefläche (18) des Lenkradkörpers und der Spannfläche (16) der Nabe eingeklemmt ist, **dadurch gekennzeichnet, daß** der Halteabschnitt (28) des Gassacks (24) zwischen der Haltefläche (18) des Lenkradkörpers und der Spannfläche (16) der Nabe eingeklemmt ist.

2. Fahrzeuglenkrad nach Anspruch 1, **dadurch gekennzeichnet, daß** die Spannfläche (16) der Nabe die Gestalt eines Kreisringes hat.

3. Fahrzeuglenkrad nach Anspruch 2, **dadurch gekennzeichnet, daß** der Spannabschnitt (26) des Gasgenerators flanschartig ausgebildet ist.

4. Fahrzeuglenkrad nach Anspruch 3, **dadurch gekennzeichnet, daß** die Haltefläche (18) des Lenkradkörpers die Gestalt der Innenfläche eines Kegelstumpfes hat, dessen größere Grundfläche der Spannfläche (16) der Nabe zugewandt ist und dessen Mittelachse mit der Mittelachse des Kreisrings zusammenfällt.

5. Fahrzeuglenkrad nach Anspruch 4, **dadurch gekennzeichnet, daß** zwischen dem Spannabschnitt (26) des Gasgenerators und dem Halteabschnitt (18) des Gassacks ein Spannring (30) angeordnet ist.

6. Fahrzeuglenkrad nach Anspruch 5, **dadurch gekennzeichnet, daß** der Spannring (30) einen V-förmigen Querschnitt hat, der zur Spannfläche (16) der Nabe hin geöffnet ist, und sich mit seiner Außenumfangsfläche des radial außenliegenden Schenkels über den Halteabschnitt (28) des Gassacks an der Haltefläche (18) des Lenkradkörpers abstützt und sich mit der Stirnseite des radial innenliegenden Schenkels über den Spannabschnitt (26) des Gasgenerators an der Spannfläche (16) der Nabe abstützt.

7. Fahrzeuglenkrad nach Anspruch 6, **dadurch gekennzeichnet, daß** der Spannring (30) elastisch verformbar ist.

8. Fahrzeuglenkrad nach Anspruch 3, **dadurch gekennzeichnet, daß** die Haltefläche (18) des Gassacks die Gestalt eines Kreisringes hat, dessen Mittelachse mit der Mittelachse der Spannfläche (16) der Nabe zusammenfällt.

9. Fahrzeuglenkrad nach Anspruch 8, **dadurch gekennzeichnet, daß** in den Halteabschnitt (28) des Gassacks ein Haltering (50) eingenäht ist.

10. Fahrzeuglenkrad nach Anspruch 9, **dadurch gekennzeichnet, daß** auf der Spannfläche (16) der Nabe hervorstehende Verformungselemente (52) angeordnet sind.

11. Fahrzeuglenkrad nach einem der vorhergehenden Ansprüche, **dadurch gekennzeichnet, daß** die Nabe (12) und der Lenkradkörper (14) durch Schrauben (40) miteinander verspannt sind.

## Claims

1. A vehicle steering wheel with an integrated vehicle occupant restraint system, comprising a gas generator (22) with a bracing section (26) and a gas bag (24) with an inlet opening, the rim portion of the inlet opening constituting a holding section (28), the vehicle steering wheel (10) comprising a hub (12) and a steering wheel body (14) with a gas bag cover (34) which is an integral part of the steering wheel body (14), a bracing surface (16) being formed on the hub (12) and a holding surface (18) being formed on the steering wheel body (14) and, by bracing the hub (12) against the steering wheel body (14), the bracing section (26) of the gas generator being clamped between the holding surface (18) of the steering wheel body and the bracing surface (16) of the hub, **characterized in that** the holding section (28) of the gas bag (24) is clamped between the holding surface (18) of the steering wheel body and the bracing surface (16) of the hub.

2. The vehicle steering wheel as claimed in claim 1, **characterized in that** the bracing surface (16) of the hub has the configuration of a circular ring.

3. The vehicle steering wheel as claimed in claim 2, **characterized in that** the bracing section (26) of the gas generator is formed in a flange-like fashion.

4. The vehicle steering wheel as claimed in claim 3, **characterized in that** the holding surface (18) of the steering wheel body has the shape of the inner surface of a truncated cone, having a major base which faces the bracing surface (16) of the hub and having a center axis which coincides with the center axis of the circular ring.

5. The vehicle steering wheel as claimed in claim 4, **characterized in that** a bracing ring (30) is arranged between the bracing section (26) of the gas generator and the holding section (18) of the gas bag.

6. The vehicle steering wheel as claimed in claim 5, **characterized in that** the bracing ring (30) has a V-shaped cross-section which is open toward the bracing surface (16) of the hub and on its radially outer limb has an outer peripheral surface which bears, by way of the holding section (28) of the gas bag, against the holding surface (18) of the steering wheel body, and the radially inner limb of the bracing ring (30) has an end face which bears, by way of the bracing section (26) of the gas generator, against the bracing surface (16) of the hub.

7. The vehicle steering wheel as claimed in claim 6, **characterized in that** the bracing ring (30) is elastically deformable.

8. The vehicle steering wheel as claimed in claim 3, **characterized in that** the holding surface (18) of the gas bag has the shape of a circular ring having a center axis which coincides with the center axis of the bracing surface (16) of the hub.

9. The vehicle steering wheel as claimed in claim 8, **characterized by** a holding ring (50) sewn into the holding section (28) of the gas bag.

10. The vehicle steering wheel as claimed in claim 9, **characterized by** projecting deformable elements (52) arranged on the bracing surface (16) of the hub.

11. The vehicle steering wheel as claimed in any one of the preceding claims, **characterized in that** the hub (12) and the steering wheel body (14) are braced together by means of screws (40).

## Revendications

1. Volant de véhicule avec un système intégré de retenue des occupants d'un véhicule, lequel est constitué d'un générateur de gaz (22) comprenant une portion de serrage (26) et un coussin à gaz (24) pourvu d'un orifice d'entrée dont la zone de bord forme une portion de retenue (28), le volant de véhicule (10) étant constitué d'un moyeu (12) et d'un corps de volant (14) muni d'un couvercle de coussin à gaz (34) qui fait partie intégrante du corps de volant (14), une surface de serrage (16) étant réalisée sur le moyeu (12) et une surface de retenue (18) étant réalisée sur le corps de volant (14), et en serrant le moyeu (12) avec le corps de volant (14), la portion de serrage (26) du coussin à gaz est immobilisée entre la surface de retenue (18) du corps de volant et la surface de serrage (16) du moyeu, **caractérisé en ce que** la portion de retenue (28) du coussin à gaz (24) est immobilisée entre la surface de retenue (18) du corps de volant et la surface de serrage (16) du moyeu.

2. Volant de véhicule selon la revendication 1, **caractérisé en ce que** la surface de serrage (16) du moyeu a la forme d'une couronne circulaire.

3. Volant de véhicule selon la revendication 2, **caractérisé en ce que** la portion de serrage (26) du générateur de gaz est réalisée à la manière d'une bride.

4. Volant de véhicule selon la revendication 3, **caractérisé en ce que** la surface de retenue (18) du corps de volant a la forme de la surface intérieure d'un cône tronqué dont la plus grande surface de base est tournée vers la surface de serrage (16) du moyeu et dont l'axe médian coïncide avec l'axe médian de la couronne circulaire.

5. Volant de véhicule selon la revendication 4, **caractérisé en ce qu'**entre la portion de serrage (26) du générateur de gaz et la portion de retenue (18) du coussin à gaz est disposé un anneau de serrage (30).

6. Volant de véhicule selon la revendication 5, **caractérisé en ce que** l'anneau de serrage (30) possède une section transversale en V, qui est ouverte en direction de la surface de serrage (16) du moyeu et qui prend appui, par la surface périphérique extérieure de son aile extérieure radiale, contre la surface de retenue (18) du corps de volant par l'intermédiaire de la portion de retenue (28), et qui prend appui, par la face frontale de son aile intérieure radiale, contre la surface de serrage (16) du moyeu par l'intermédiaire de la portion de serrage (26) du générateur de gaz.

7. Volant de véhicule selon la revendication 6, **caractérisé en ce que** l'anneau de serrage (30) est déformable élastiquement.

8. Volant de véhicule selon la revendication 3 **caractérisé en ce que** la surface de retenue (18) du coussin à gaz a la forme d'une couronne circulaire dont l'axe médian coïncide avec l'axe médian de la surface de serrage (16) du moyeu.

9. Volant de véhicule selon la revendication 8, **caractérisé en ce qu'**un anneau de retenue (50) est cousu dans la portion de retenue (28).

10. Volant de véhicule selon la revendication 9, **caractérisé en ce que** sur la surface de serrage (16) du moyeu sont disposés des éléments déformables en saillie (52).

11. Volant de véhicule selon l'une quelconque des revendications précédentes, **caractérisé en ce que** le moyeu (12) et le corps de volant (14) sont solidarisés l'un à l'autre par des vis (40).
